# EUROPÄISCHE PATENTSCHRIFT

(11) **EP 2 203 511 B1**
(45) Veröffentlichungstag und Bekanntmachung des Hinweises auf die Patenterteilung: **29.02.2012**
(21) Anmeldenummer: 08841590.6
(22) Anmeldetag: 22.10.2008
(51) Int. Cl.: C08L 3/00, C08L 33/06, C08L 63/00, C08L 67/00

(54) **POLYMERES MATERIAL UND VERFAHREN ZU DESSEN HERSTELLUNG**
POLYMER MATERIAL AND METHOD FOR THE PRODUCTION THEREOF
MATÉRIAU POLYMÈRE ET SON PROCÉDÉ D'ÉLABORATION

(30) Priorität: 22.10.2007 DE 102007050769
(43) Veröffentlichungstag der Anmeldung: 07.07.2010
(73) Patentinhaber: BIOTEC Biologische Naturverpackungen GmbH & Co. KG, 46446 Emmerich (DE)
(72) Erfinder: SCHMIDT, Harald, 46446 Emmerich (DE); HESS, Christoph, 47533 Kleve (DE); MATHAR, Johannes, NL-7041 GP's-Heerenberg (NL); HACKFORT, Ralf, 46446 Emmerich (DE)
(74) Vertreter: Cohausz & Florack
(86) Internationale Anmeldenummer: PCT/EP2008/064270
(87) Internationale Veröffentlichungsnummer: WO 2009/053383

(56) Entgegenhaltungen:
- WO-A-2005/017034
- DATABASE CA [Online] CHEMICAL ABSTRACTS SERVICE, COLUMBUS, OHIO, US; LEE, JAE CHEOL ET AL: "Process for preparing biodegradable resin compositions" XP002512275 gefunden im STN Database accession no. 136:341532 & KR 2000 031 683 A (SAEHAN INDUSTRIES INC., S. KOREA) 5. Juni 2000 (2000-06-05)

## Beschreibung

Die Erfindung betrifft ein stärkehaltiges polymeres Material, ein Verfahren zu dessen Herstellung sowie aus dem Material hergestellte Formteile, Folien und/oder Fasern.

Polymer-Blends auf Stärkebasis, welche Stärke in Kombination mit einem oder mehreren thermoplastischen Polymeren, z. B. Polyestern, enthalten; sind allgemein bekannt. Die Herstellung und Eigenschaften von weichmacherfreien stärkehaltigen Polymer-Blends werden beispielsweise in den Druckschriften EP 0 596 437 B1 und EP 0 917 540 B1 beschrieben.

In der Regel enthalten weichmacherfreie stärkehaltige Polymer-Blends Stärke bis zu einem Mengenanteil von maximal etwa 33 Gew.%, bezogen auf die Gesamtzusammensetzung des Polymer-Blends. Obwohl eine weitere Erhöhung des Stärkeanteils aus wirtschaftlichen und ökologischen Gründen wünschenswert wäre, ist dies nicht ohne weiteres möglich, da eine Erhöhung des Stärkeanteils in der Regel mit einer erheblichen Verschlechterung der mechanischen Eigenschaften des Polymers einhergeht.

Ein weichmacherfreies thermoplastisches Polymer-Blend auf Stärkebasis, das sich insbesondere zur Blasfolienextrusion, Flachfolienextrusion und zum Spritzgießen von vollständig biologisch abbaubaren Produkten eignet, ist unter dem Handelsnamen "Bioplast^{®} GF 106/02" von der Firma Biotec GmbH & Co. KG in Emmerich (Deutschland) kommerziell erhältlich.

Der Erfindung liegt die Aufgabe zugrunde, die mechanischen Eigenschaften der eingangs genannten stärkehaltigen Materialien sowie der daraus hergestellten Produkte (z. B. Formteile, Folien und/oder Fasern) zu verbessern. Insbesondere liegt der Erfindung die Aufgabe zugrunde, weichmacherfreie Polymer-Blends auf Stärkebasis bereitzustellen, die einen möglichst hohen Stärkegehalt bei gleichzeitig ausgezeichneten mechanischen Eigenschaften aufweisen.

Diese Aufgabe wird erfindungsgemäß durch ein Verfahren zur Herstellung eines polymeren Materials gelöst, welches gekennzeichnet ist durch:
(a) Herstellen eines Gemischs enthaltend wenigstens
   - 1 bis 75 Gew.% Stärke und/oder Stärkederivat,
   - 10 bis 85 Gew.% Polyester und
   - 0,01 bis 7 Gew.% eines epoxidgruppenhaltigen Polymers;
(b) Homogenisieren des Gemischs unter Zuführen von thermischer und/oder mechanischer Energie;
(c) Einstellen des Wassergehalts des Gemischs, so dass das Endprodukt einen Wassergehalt von kleiner etwa 12 Gew.%, bezogen auf die Gesamtzusammensetzung des Gemischs, aufweist.

Vorteilhafte Ausgestaltungen der Erfindung sind in den Unteransprüchen beschrieben.

Ein wesentliches Merkmal des erfindungsgemäßen Verfahrens ist die Zugabe eines epoxidgruppenhaltigen Polymers. Überraschend wurde festgestellt, dass die Gegenwart von epoxidgruppenhaltigen Polymeren als Additiv bei der Herstellung von stärkehaltigen polymeren Materialien zu einer wesentlichen Verbesserung der mechanischen Eigenschaften des Materials, insbesondere dessen Zugfestigkeit, Reißdehnung und Dart-Drop-Werten, führt.

Das nach dem erfindungsgemäßen Verfahren hergestellte polymere Material zeichnet sich durch ausgezeichnete mechanische Eigenschaften aus. So kann eine aus dem polymeren Material hergestellte Folie eine Zugfestigkeit gemäß DIN 53455 von 5 bis 60 N/mm², insbesondere von 10 bis 40 N/mm² und/oder eine Reißdehnung gemäß DIN 53455 von 100 bis 1000 %, insbesondere von 200 bis 800 %, aufweisen.

Mit dem erfindungsgemäßen Verfahren sind ferner erstmals weichmacherfreie Polymer-Blends auf Stärkebasis mit einen Stärkegehalt größer gleich 34 Gew.% herstellbar, wobei aus den Polymer-Blends hergestellte Folien eine Reißdehnung gemäß DIN 53455 von mindestens 300 % und/oder einen Dart-Drop-Wert gemäß ASTM D-1709 von mindestens 10 g/µm aufweisen.

Das erfindungsgemäße Verfahren sieht vor, dass ein Gemisch enthaltend Stärke bzw. Stärkederivat, Polyester und epoxidgruppenhaltiges Polymer homogenisiert wird.

Die Herstellung von stärkehaltigen thermoplastischen Polymeren durch Homogenisieren eines stärkehaltigen Ausgangsgemischs ist allgemein bekannt und erfolgt üblicherweise in einem Extruder. Geeignete Herstellungsverfahren für stärkehaltige thermoplastische Polymere sind beispielsweise in den Druckschriften EP 0 596 437 B1 und EP 0 917 540 B1 beschrieben.

Die im erfindungsgemäßen Verfahren eingesetzte Stärke bzw. das Stärkederivat sind vorzugsweise ausgewählt aus nativer Kartoffelstärke, Tapiokastärke, Reisstärke und Maisstärke.

Gemäß einer bevorzugten Ausführungsform der Erfindung enthält das Gemisch 5 bis 75 Gew.%, insbesondere 10 bis 75 Gew.%, vorzugsweise 15 bis 70 Gew.%, noch bevorzugter 25 bis 55.Gew.%, am bevorzugtesten 34 bis 51 Gew.% Stärke und/oder Stärkederivat.

Der im Gemisch enthaltene Polyester ist vorzugsweise ausgewählt aus der Gruppe bestehend aus aliphatisch-aromatischem Copolyester, aliphatischem Polyester, aromatischen Polyester, PHA, PLA, PHB und PHBV.

Für das erfindungsgemäße Verfahren kommen insbesondere (aber nicht ausschließlich) Polyester in Frage, die gemäß EN 13432 biologisch abbaubar sind und/oder eine Glasübergangstemperatur (Tg) kleiner 0°C, insbesondere kleiner -4°C, weiter bevorzugt kleiner -10°C, noch weiter bevorzugt kleiner -20°C und am bevorzugtesten kleiner -30°C aufweisen. Die im erfindungsgemäßen Verfahren eingesetzten Polyester sind ferner vorzugsweise thermoplastisch.

Gemäß einer besonders bevorzugten Ausführungsform der Erfindung wird als Polyester ein aliphatisch-aromatischer Polyester ein Copolyester, insbesondere ein statistischer Copolyester, auf Basis von mindestens Adipinsäure eingesetzt. Weiter bevorzugt handelt es sich um einen Copolyester bzw. statistischen Copolyester auf Basis von 1,4-Butandiol, Adipinsäure und Terephthalsäure bzw. Terephthalsäurederivat (z. B. Dimethylterephthalat DMT). Dieser kann insbesondere eine Glasübergangstemperatur (Tg) von -25 bis -40 °C, insbesondere -30 bis -35 °C, und/oder einen Schmelzbereich von 100 bis 120 °C, insbesondere 105 bis 115 °C, aufweisen.

Geeignete Polyester sind ferner insbesondere aliphatische Polyester, die ausgewählt sind aus der Gruppe bestehend aus Polyhydroxvalerat, Polyhydroxybutyrat-Hydroxyvalerat-Copolymer und Polycaprolacton. Weiter bevorzugte aliphatische Polyester sind solche auf Succinat-Basis, wobei der Polyester insbesondere ausgewählt sein kann aus der Gruppe bestehend aus Polybutylensuccinat (PBS), Polybutylensuccinatadipat (PBSA) und Polyethylensuccinat (PES) oder Mischungen daraus.

Der Gehalt an Polyester im Gemisch beträgt vorzugsweise 20 bis 85 Gew.%, insbesondere 30 bis 80 Gew.%, noch bevorzugter 40 bis 80 Gew.%, bezogen auf die Gesamtzusammensetzung.

Das erfindungsgemäße polymere Material enthält ferner ein epoxidgruppenhaltiges Polymer, wobei es sich vorzugsweise um ein epoxidgruppenhaltiges Copolymer handelt. Als epoxidgruppenhaltige Polymere bzw. Copolymere kommen insbesondere solche in Frage, die ein Molekulargewicht (M_{w}) von 1.000 bis 25.000, insbesondere 3.000 bis 10.000, aufweisen.

Vorzugsweise handelt es sich bei dem epoxidgruppenhaltigen Polymer um ein glycidyl(meth)acrylathaltiges Polymer. Ein geeignetes glycidyl(meth)acrylathaltige Polymer ist beispielsweise ein Copolymer aus (a) Styrol und/oder Ethylen und/oder Methylmethacrylat und/oder Methylacrylat und (b) Glycidyl(meth)acrylat. Besonders gut geeignet als glycidyl(meth)acrylathaltiges Polymer ist ein Copolymer, das ausgewählt ist aus der Gruppe bestehend aus Styrol-Methylmethacrylat-Glycidylmethacrylat, Ethylen-Methylacrylat-Glycidylmethacrylat und Ethylen-Glycidylmethacrylat. Darin ist Glycidyl(meth)acrylat bevorzugt in einer Menge von 1 bis 60 Gew.%, insbesondere 5 bis 55 Gew.%, weiter bevorzugt 45 bis 52 Gew.%, bezogen auf die Gesamtzusammensetzung des glycidyl(meth)acrylathaltigen Polymers, enthalten.

Als epoxidgruppenhaltige Polymere kommen ferner epoxidgruppenhaltige Copolymere auf Basis von Styrol, Ethylen, Acrylsäureester und/oder Methacrylsäureester in Frage.

Das Gemisch enthält vorzugsweise 0,01 bis 5 Gew.%, insbesondere 0,05 bis 3 Gew.%, noch bevorzugter 0,1 bis 2 Gew.% epoxidgruppenhaltiges Polymer, bezogen auf die Gesamtzusammensetzung.

Das Gemisch kann neben den Hauptbestandteilen Stärke bzw. Stärkederivat, Polyester und epoxidgruppenhaltigem Polymer noch übliche Additive wie zum Beispiel Verarbeitungshilfsmittel, Weichmacher, Stabilisatoren, Antiflammmittel und/oder Füllstoffe enthalten.

Das erfindungsgemäße Verfahren sieht vor, dass das Gemisch homogenisiert wird. Das Homogenisieren kann durch beliebige, dem auf dem Gebiet der Kunststofftechnik tätigen Fachmann geläufige Maßnahmen erfolgen. Vorzugweise erfolgt das Homogenisieren des Gemischs durch Dispergieren, Rühren, Kneten und/oder Extrudieren. Gemäß einer bevorzugten Ausführungsform der Erfindung wirken bei der Homogenisierung Scherkräfte auf das Gemisch ein. Geeignete Herstellungsverfahren für stärkehaltige thermoplastische Polymere, die auch auf die Herstellung des erfindungsgemäßen polymeren Materials analog anwendbar sind, sind beispielsweise in den Druckschriften EP 0 596 437 B1 und EP 0 917 540 B1 beschrieben.

Gemäß einer bevorzugten Ausführungsform der Erfindung wird das Gemisch während des Homogenisierens (z. B. im Extruder) erwärmt, vorzugsweise auf eine Temperatur von 90 bis 250°C, insbesondere 130 bis 220°C.

Erfindungsgemäß ist es bevorzugt, den Wassergehalt des Gemischs möglichst gering zu halten. Vorzugsweise wird der Wassergehalt des Gemischs auf kleiner 10 Gew.%, insbesondere kleiner 7 Gew.%, weiter bevorzugt kleiner 5 Gew.%, insbesondere kleiner 3 Gew.%, noch bevorzugter kleiner 1,5 Gew.% und am bevorzugtesten kleiner 1 Gew.%, bezogen auf die Gesamtzusammensetzung, eingestellt.

Vorzugsweise erfolgt die Einstellung des Wassergehalts durch Trocknen während des Homogenisierens. Der Trocknungsvorgang kann beispielsweise durch Entgasen des Gemischs bzw. der Schmelze, zweckmäßigerweise durch Abziehen von Wasserdampf während des Extrudierens, erfolgen.

Gemäß einer weiteren bevorzugten Ausführungsform der Erfindung besitzt das nach dem erfindungsgemäßen Verfahren hergestellte polymere Material thermoplastische Eigenschaften. Vorzugsweise ist das Material thermoplastisch verarbeitbar.

Mit dem erfindungsgemäßen Verfahren ist es möglich, weichmacherfreie thermoplastische Polymer-Blends auf Stärkebasis herzustellen, die einen Stärkegehalt von mindestens 34 Gew.% aufweisen und gleichzeitig ausgezeichnete mechanische Eigenschaften besitzen. Weichmacherfrei bedeutet in diesem Zusammenhang insbesondere, dass die Polymer-Blends kein Glycerin und/oder Sorbitol enthalten. Aus dem nach dem erfindungsgemäßen Verfahren hergestellten polymeren Material lassen sich insbesondere Folien herstellen, die eine Reißdehnung gemäß DIN 53455 von mindestens 200 % und/oder einen Dart-Drop-Wert gemäß ASTM D-1709 von mindestens 5 g/µm aufweisen.

Die Erfindung betrifft daher ferner ein stärkehaltiges thermoplastisch verarbeitbares polymeres Material, wobei
(a) das polymere Material weniger als 10 Gew.%, bezogen auf die Gesamtzusammensetzung, niedermolekulare Substanzen enthält,
(b) der Stärkeanteil des polymeren Materials mindestens 34 Gew.% beträgt und
(c) eine aus dem polymeren Material hergestellte Folie eine Reißdehnung gemäß DIN 53455 von mindestens 200 % und/oder einen Dart-Drop-Wert gemäß ASTM D-1709 von mindestens 5 g/µm aufweist.

Das erfindungsgemäße stärkehaltige Material enthält weniger als etwa 10 Gew.% niedermolekulare Substanzen und ist dadurch im wesentlichen weichmacherfrei. Unter niedermolekularen Substanzen im Sinne der Erfindung werden Substanzen mit einem Molekulargewicht kleiner 500 g/mol, insbesondere kleiner 250 g/mol, verstanden. Niedermolekulare Substanzen im Sinne der Erfindung sind insbesondere Wasser, Glycerin, Sorbitol und/oder Mischungen daraus umfassen.

Gemäß einer bevorzugten Ausführungsform der Erfindung enthält das erfindungsgemäße polymere Material weniger als 7 Gew.%, insbesondere weniger als 5 Gew.%, vorzugsweise weniger als 3 Gew.%, bezogen auf die Gesamtzusammensetzung, niedermolekulare Substanzen. Gemäß einer weiteren bevorzugten Ausführungsform der Erfindung enthält das erfindungsgemäße polymere Material kein Glycerin und/oder Sorbitol.

Gemäß einer weiteren bevorzugten Ausführungsform der Erfindung beträgt der Stärkeanteil des polymeren Materials mindestens 35 Gew.%, insbesondere mindestens 36 Gew.%, vorzugsweise mindestens 37 Gew.%, weiter bevorzugt mindestens 38 Gew.% und am bevorzugtesten mindestens 39 Gew.%.

Das erfindungsgemäße polymere Material kann als weiteren Bestandteil ferner einen Polyester, vorzugsweise in einer Menge kleiner 70 Gew.%, insbesondere kleiner 65 Gew.%, noch bevorzugter kleiner 60 Gew.%, am bevorzugtesten kleiner 55 Gew.%, enthalten.

Die erfindungsgemäßen polymeren Materialien eignen sich für die verschiedensten Zwecke. Insbesondere eignen sich die Materialien zur Herstellung von Formteilen, Folien oder Fasern. Die Erfindung betrifft folglich auch aus den erfindungsgemäßen Materialien hergestellte Formteile, Folien oder Fasern.

Nachfolgend wird die Erfindung anhand von Ausführungsbeispielen näher beschrieben.

### Beispiel 1

### Herstellung von glycidyl-modifiziertem stärkehaltigem polymeren Material

Ein Gemisch aus nativer Kartoffelstärke, aliphatisch-aromatischem Copolyester und epoxidgruppenhaltigem Polymer in den unten angegebenen Mengenverhältnissen wurde in einen Zweiwellenextruder eingefüllt

Als aliphatisch-aromatischer Copolyester wurde ein statistischer Copolyester auf Basis von 1,4-Butandiol, Adipinsäure und Terephthalsäure mit einer Glasübergangstemperatur (Tg) von -30 bis -35°C und einem Schmelzbereich von 105 bis 115°C eingesetzt.

Als epoxidgruppenhaltiges Polymer (Glycidyl-Additiv) wurde ein statistisches Copolymer auf Basis von Styrol-Methylmethacrylat-Glycidylmethacrylat mit einem Molekulargewicht M_{W} von etwa 6800 und einem Epoxygruppenäquivalentgewicht von 285 g/mol eingesetzt (Additiv A).

Das Gemisch wurde im Extruder in einem Temperaturbereich von 150 bis 190°C intensiv gemischt, wobei die Schmelze gleichzeitig entgast wurde um dem Gemisch Wasser zu entziehen. Es entstand eine homogene Schmelze, die abgezogen und granuliert werden konnte. Der Wassergehalt der in der beschriebenen Weise homogenisierten, thermoplastisch verarbeitbaren Masse lag unter 1 Gew.%.

Durch das Mischen und Homogenisieren der Stärke mit aliphatisch-aromatischem Copolyester entstand ein zweiphasiger Blend, in dem die Stärke die disperse und der aliphatisch-aromatische Copolyester die kontinuierliche Phase ausbildet. Die Beimengung von epoxidgruppenhaltigem Polymer (d. h. glycidylhaltigem Polymer) bewirkte eine intra- und intermolekulare chemische Verknüpfung von Stärke und aliphatisch-aromatischem Copolyester, welche sich signifikant auf die mechanischen Eigenschaften des hergestellten thermoplastischen Blends auswirkte.

Aus den hergestellten Materialien wurden Folien mit einer Dicke von ca. 40 µm durch Blasfolienextrusion hergestellt. Hierzu wurde das Granulat in einen Einwellenextruder (L/D = 30, Einzug gekühlt, Sieb 250 µm) gegeben, bei 165 bis 190°C aufgeschmolzen, über eine Ringdüse (Mono, Düsenspalt 0,8 mm) zum Folienschlauch aufgeblasen (Aufblasverhältnis 3,5) und nach Flachlegung abgezogen.

### Beispiel 2

In diesem Beispiel wurde der Einfluss von Glycidyl-Additiv auf die mechanischen Eigenschaften von Blasfolien mit unterschiedlichem Stärkegehalt ermittelt.

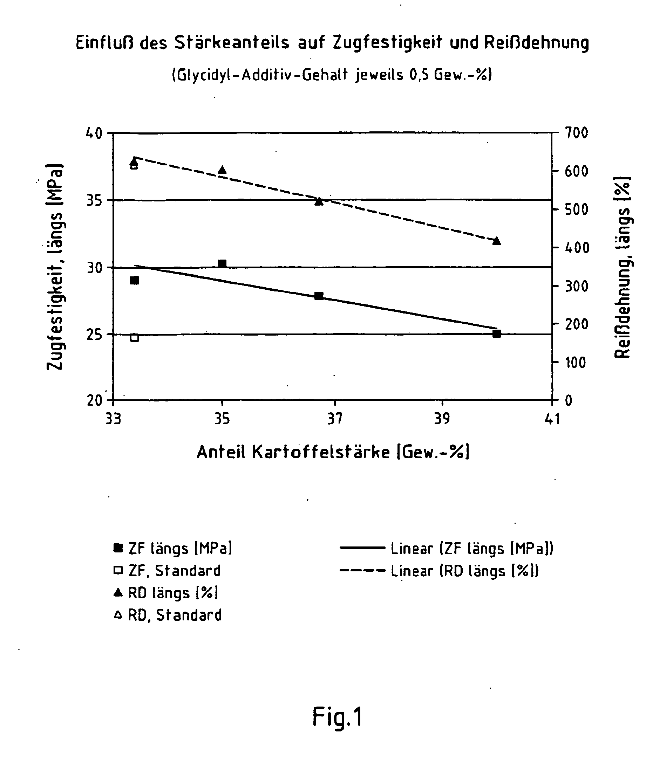

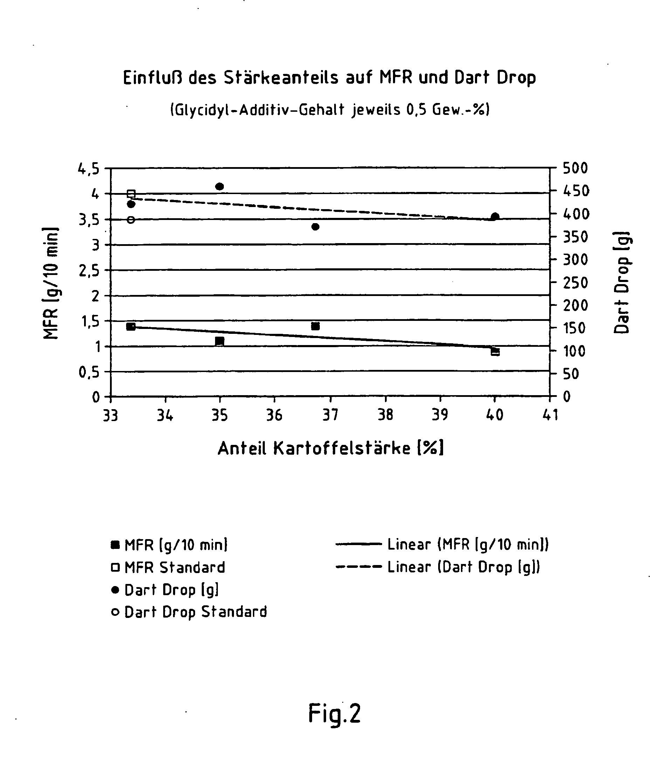

Es wurden verschiedene stärkehaltige polymere Materialien aus aliphatisch-aromatischem Copolyester (59,5 bis 66,1 Gew.%), nativer Kartoffelstärke (33,4 bis 40 Gew.%) und epoxidgruppenhaltigem Copolymer (0,5 Gew.%) gemäß Beispiel 1 hergestellt. Der Mengenanteil der nativen Kartoffelstärke wurde dabei auf Kosten des aromatisch-aliphatischen Copolyesters zwischen 33,4 bis 40 Gew.% schrittweise variiert (siehe Figuren 1 und 2).

Als Vergleichsrezeptur wurde polymeres Material ohne Glycidyl-Additiv aus aliphatisch-aromatischem Copolyester (66,6 Gew.%) und nativer Kartoffelstärke (33,4 Gew.%) gemäß der in Beispiel 1 beschriebenen Vorgehensweise hergestellt.

Nach Compoundierung der verschiedenen Rezepturvarianten wurden Blasfolien aus den hergestellten polymeren Materialien hergestellt und deren mechanische Eigenschaften bestimmt. Insbesondere wurden die Zugfestigkeit (ZF), Reißdehnung (RD), MFR (Melt Flow Rate) und Dart-Drop-Werte(Durchstoßfestigkeit) der Folien bestimmt.

Figur 1 zeigt die Zugfestigkeiten und Reißdehnungen der hergestellten Folien bei verschiedenen Stärkegehalten.

Im Vergleich zu einer aus der Vergleichsrezeptur hergestellten Standardfolie ohne Glycidyl-Additiv weist die entsprechende glycidyl-modifizierte Folie mit gleichem Stärkegehalt (33,4 Gew.%) eine wesentlich höhere Zugfestigkeit auf. Diese Differenz führt, auf Grund der mit zunehmendem Stärkeanteil allgemein abfallenden Zugwerte, zu vergleichbaren Zugfestigkeiten von Standardfolien mit 33,4 % Stärke und glycidyl-modifizierten Folien mit 40 % Stärke.

Gleichen Stärkegehalt vorausgesetzt, unterscheidet sich der Wert für die Reißdehnung der glycidyl-modifizierten Folie nicht von dem der Standardfolie. Durch den Einsatz von Glycidyl-Additiv kann jedoch selbst für eine Folie mit einem Stärkeanteil von 40 % das Niveau der Reißdehnung (= Elastizität) auf über 400 % gehalten werden.

Dabei ist zu berücksichtigen, dass Folien aus polymeren Material gleicher Zusammensetzung ohne Glycidyl-Additiv mit mehr als 34 % Stärkeanteil äußerst körnig, spröde und brüchig sind, so dass eine Ermittlung von mechanischen Kennwerten praktisch nicht möglich ist.

In Figur 2 sind die MFR (Melt Flow Rate) und die Dart-Drop-Werte (Durchstoßfestigkeit) von glycidyl-modifizierten Folien mit zunehmendem Stärkegehalt dargestellt.

Aus Figur 2 geht hervor, dass mit zunehmendem Stärkegehalt beide Kurven nur leicht abfallen. Während die Dart-Drop-Werte für die Standardrezeptur ohne Glycidyl-Additiv und die modifizierte Rezeptur auf gleichem Niveau liegen, bewirkt das Glycidyl-Additiv eine MFR-Absenkung auf weniger als die Hälfte des Standardwertes.

Das im Vergleich zu der Standardfolie ohne Glycidyl-Additiv deutlich abgesenkte MFR-Niveau der glycidylbehandelten Formulierungen ist - ohne auf eine bestimmte Theorie festgelegt zu sein - auf die epoxid-induzierte Vernetzung der Polymerketten zurückzuführen. Der MFR erscheint daher als geeigneter Parameter zur Beurteilung der chemischen Umsetzung entsprechender Kettenverlängerer/Vernetzer.

Beachtlich in Figur 2 sind auch die über den gesamten Bereich der Stärkeanreicherung stabilen Dart-Drop-Werte. Es bestätigt sich die bereits durch Auftragung von Zugfestigkeit und Reißdehnung (Figur 1) gemachte Beobachtung, dass durch Zugabe reaktiver Glycidyl-Additive zur Basisrezeptur einer üblicherweise mit steigendem Stärkeanteil zunehmenden Materialversprödung wirksam begegnet werden kann.

### Beispiel 3

In diesem Beispiel wurde der Einfluss unterschiedlicher Glycidyl-Additive auf die mechanischen Eigenschaften von stärkehaltigen Blasfolien bestimmt.

Beispiel 2 wurde mit drei unterschiedlichen epoxidgruppenhaltigen Polymeren (Glycidyl-Additive) wiederholt.

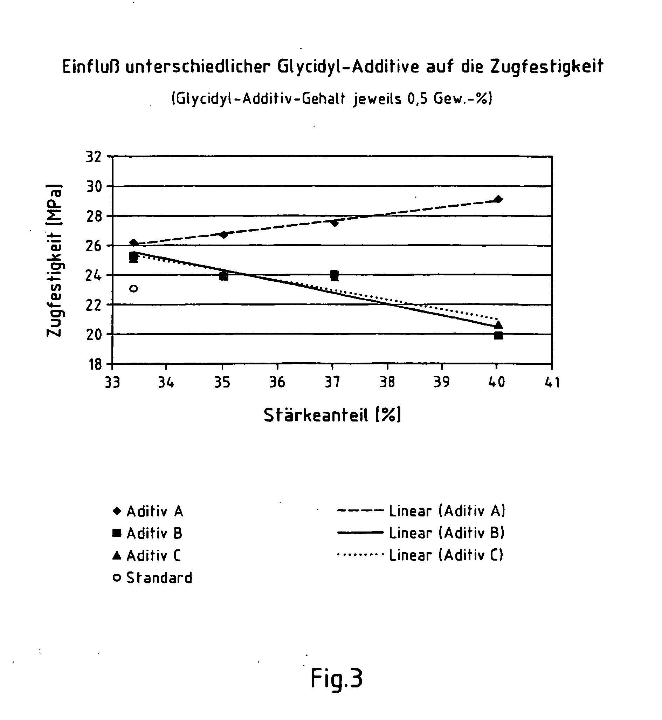

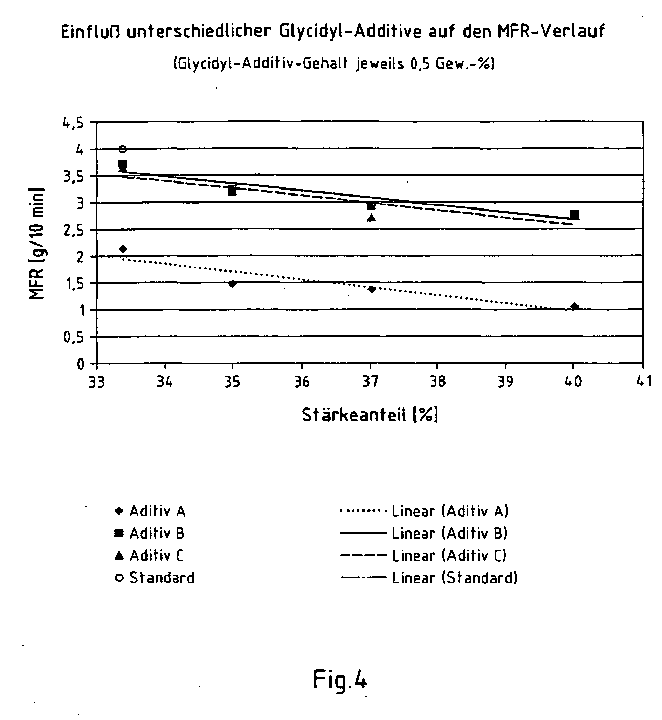

Es wurden verschiedene stärkehaltige polymere Materialien aus aliphatisch-aromatischem Copolyester (59,5 bis 66,1 Gew.%), nativer Kartoffelstärke (33,4 bis 40 Gew.%) und epoxidgruppenhaltigem Copolymer (Additiv A, B oder C, siehe unten) (0,5 Gew.%) gemäß der in Beispiel 1 beschriebenen Vorgehensweise hergestellt. Der Mengenanteil der nativen Kartoffelstärke wurde dabei auf Kosten des aromatisch-aliphatischen Copolyesters zwischen 33,4 bis 40 Gew.% schrittweise variiert (siehe Figuren 3 und 4) .

Als Vergleichsrezeptur wurde polymeres Material ohne Glycidyl-Additiv aus aliphatisch-aromatischem Copolyester (66,6 Gew.%) und nativer Kartoffelstärke (33,4 Gew.%) gemäß der in Beispiel 1 beschriebenen Vorgehensweise hergestellt.

Als Additiv A wurde ein statistisches Copolymer auf Basis von Styrol-Methylmethacrylat-Glycidylmethacrylat mit einem Molekulargewicht M_{W} von etwa 6800 und einem Epoxygruppenäquivalentgewicht von 285 g/mol eingesetzt.

Als Additiv B wurde ein statistisches Copolymer auf Basis von Ethylen-Methylacrylat-Glycidylmethacrylat mit ca. 24 Gew.% Methylacrylat, 68 Gew.% Ethylen und 8 Gew.% Glycidylmethacrylat und einem Epoxygruppenäquivalentgewicht von 1775 g/mol eingesetzt.

Als Additiv C wurde ein statistisches Copolymer auf Basis von Ethylen-Glycidylmethacrylat mit ca. 92 Gew.% Ethylen und 8 Gew.% Glycidylmethacrylat und einem Epoxygruppenäquivalentgewicht von 1775 g/mol eingesetzt.

Die eingesetzten Glycidyl-Additive unterschieden sich insbesondere in ihrem Gehalt an reaktiven Epoxy-Einheiten. Die massebezogene Konzentration an Epoxy-Einheiten ist in Additiv A um den Faktor 6,23 höher als in den Additiven 2 und 3. Demnach enthalten, bei gleicher Einwaage, Additiv B resp. Additiv C weniger als ein Sechstel an reaktiven Epoxidgruppen im Vergleich zu Additiv A.

Diese signifikante Differenz wirkt sich entsprechend deutlich auf die Eigenschaften vergleichbar hergestellter Rezepturen aus.

Die Figuren 3 und 4 zeigen exemplarisch die stärkegehaltabhängige Entwicklung von Zugfestigkeit und MFR von stärkehaltigen polymeren Materialien gemäß Beispiel 2, versetzt mit jeweils 0,5 % der Additive A, B oder C.

Aus Figur 3 geht hervor, dass die Zugfestigkeit der Folien bei Additiv A mit zunehmendem Stärkegehalt linear ansteigt, während sie bei den Additiven 2 und 3 abnimmt.

Aus Figur 4 geht hervor, dass die allesamt mit steigendem Stärkeanteil linear leicht abfallenden MFR-Werte für das mit Additiv A behandelte Material auf sehr niedrigem Niveau liegen. Ein Vergleich der mit den Additiven 2 bzw. 3 behandelten Materialien mit einer Standardfolie ohne Glycidyl-Additiv lässt dagegen keinen nennenswerten Einfluss des Glycidyl-Additivs auf die Melt Flow Rate erkennen.

Die in den Figuren 3 und 4 dargestellten Kurvenverläufe zeigen, dass ein merklicher Einfluss der Additive 2 und 3 auf die mechanischen Eigenschaften der Folien bei der verwendeten Konzentration von 0,5 Gew.% kaum feststellbar ist. Gleichwohl wurde auch bei den Additiven B und C in der verwendeten Konzentration eine Verbesserung der Kompatibilität der Bestandteile Stärke und Polyester gegenüber der Vergleichsrezeptur ohne Glycidyl-Additiv festgestellt.

### Beispiel 4

In diesem Beispiel wurde der Einfluss unterschiedlicher Konzentrationen von epoxidgruppenhaltigem Polymer (Glycidyl-Additiv) auf die mechanischen Eigenschaften von Blasfolien mit einem Stärkegehalt von bis zu 42 Gew.% bestimmt.

Auf einer Produktionsanlage (ZSK 70/7) wurde zunächst die Wirksamkeit unterschiedlicher Additivkonzentrationen überprüft. Hierzu wurden Materialien mit drei verschiedenen Additivkonzentrationen compoundiert (0,1 Gew.% Glycidyl-Additiv, 0,5 Gew.% Glycidyl-Additiv und eine Vergleichsrezeptur (Standard) ohne Additiv). Als epoxidgruppenhaltiges Polymer wurde Additiv A aus Beispiel 3 verwendet.

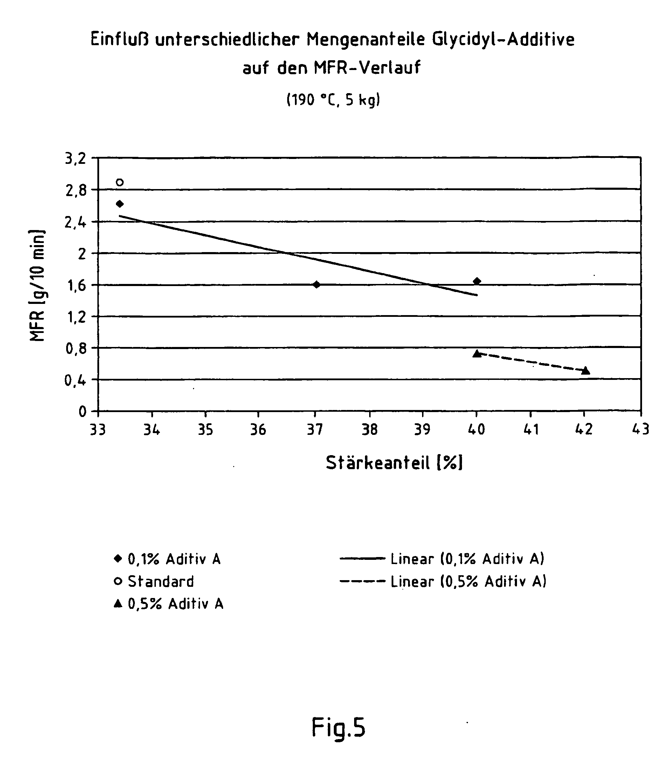

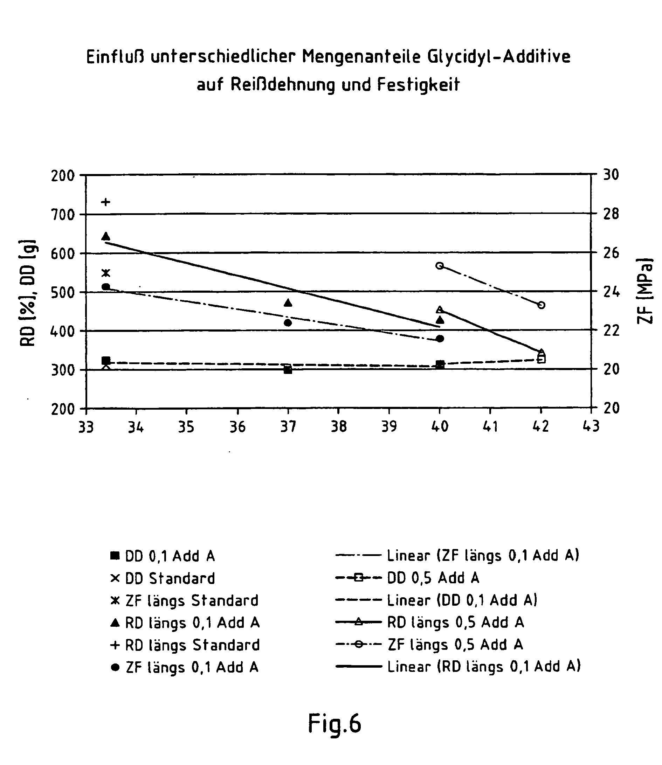

Es wurden verschiedene stärkehaltige polymere Materialien aus aliphatisch-aromatischem Copolyester (57,5 bis 66,5 Gew.%), nativer Kartoffelstärke (33,4 bis 42 Gew.%) und epoxidgruppenhaltiges Polymer (0,1 bzw. 0,5 Gew.%) gemäß Beispiel 1 hergestellt. Der Mengenanteil der nativen Kartoffelstärke wurde dabei auf Kosten des aromatisch-aliphatischen Copolyesters zwischen 33,4 bis 42 Gew.% schrittweise variiert (siehe Figuren 5 und 6). Ebenso wurde der Mengenanteil des epoxidgruppenhaltigen Polymers (Additiv A) auf Kosten des aromatisch-aliphatischen Copolyesters variiert.

Als Vergleichsrezeptur wurde polymeres Material ohne Glycidyl-Additiv aus aliphatisch-aromatischem Copolyester (66,6 Gew.%) und nativer Kartoffelstärke (33,4 Gew.%) gemäß der in Beispiel 1 beschriebenen Vorgehensweise hergestellt.

Figur 5 zeigt den Verlauf der Melt Flow Rate (MFR) von aus den Materialien hergestellten Blasfolien in Abhängigkeit des Stärkegehaltes und der Additiv-Konzentration. Aus den Werten ist ersichtlich, dass sich die Melt Flow Rate (MFR) (d. h. die Fließfähigkeit) mit steigendem Stärkegehalt und zunehmender Glycidyl-Konzentration in den Materialien reduziert. Im Vergleich zur Standardrezeptur (Kreis) sinkt der MFR-Wert der Formulierung mit 42 Gew.% Stärke und 0,5 Gew.% Glycidyl-Additiv auf weniger als ein Fünftel ab (Dreieck), ein Zeichen für umfangreiche Vernetzung der enthaltenen Polymere.

Ohne auf eine bestimmte Theorie festgelegt zu sein, kann dieser Verlauf mit einer Vernetzungsreaktion des Glycidyl-Additivs mit dem Polyester bzw. der Stärke erklärt werden. Die sprunghafte MFR-Halbierung bei 40 Gew.% Stärke im Übergang von durchgezogener zu gestrichelter Kurve zeigt, dass der absinkende MFR-Wert nicht allein auf eine Erhöhung des Stärkeanteils (wie dies im Falle der durchgezogenen Kurve zwischen 33 und 40 Gew.% der Fall ist), sondern maßgeblich auch auf eine vermehrte Umsetzung des konzentrierter eingesetzten Glycidyl-Additivs zurückgeführt werden kann.

In Figur 6 ist der Verlauf von Zugfestigkeit (ZF), Reißdehnung (RD) und Dart Drop (DD) für Folien mit unterschiedlichen Gehalten an Stärke und Glycidyl-Additiv dargestellt. Während ZF und RD mit steigendem Stärkegehalt abnehmen, verbleibt der DD-Wert auf konstantem Niveau.

Aus Figur 6 ist ersichtlich, dass die mit steigendem Stärkeanteil linear abnehmende Reißdehnung durch Zugabe von Glycidyl-Additiv nicht merklich beeinflusst wird. Selbst bei 0,5 Gew.% Additivanteil (durchgezogene Kurve) sinkt der Wert nach Überschreiten von 40 Gew.% Stärke weiter ab. Die Durchstoßfestigkeit (DD-Wert) hält sich über den gesamten untersuchten Bereich auf konstantem Niveau.

Ohne auf eine bestimmte Theorie festgelegt zu sein, wird angenommen, dass der Effekt eines mit steigendem Stärkeanteil üblicherweise abnehmenden DD-Wertes (d. h. Folie wird spröder) durch die Polymervernetzung mit dem Glycidyl-Additiv kompensiert wird. Die bei höherem Glycidyl-Additiv-Gehalt umfangreichere Strangverknüpfung lässt sich durch eine signifikant höhere Zugfestigkeit bei gleichem Stärkeanteil nachweisen (sprunghafter Übergang der strichpunktierten Kurve bei 40 Gew.% Stärke).

### Beispiel 5

In diesem Beispiel wurden die Glycidyl-Additive 1 und 2 aus Beispiel 3 bei äquivalenten Glycidyl-Anteilen verglichen.

Zunächst wurde ein stärkehaltiges polymeres Material aus aliphatisch-aromatischem Copolyester (59,9 Gew.%), nativer Kartoffelstärke (40 Gew.%) und *Additiv A* aus Beispiel 3 (0,1 Gew.%) gemäß der in Beispiel 1 beschriebenen Vorgehensweise hergestellt.

Anschließend wurde ein stärkehaltiges polymeres Material aus aliphatisch-aromatischem Copolyester (59,4 Gew.%), nativer Kartoffelstärke (40 Gew.%) und *Additiv B* aus Beispiel 3 (0,6 Gew.%) gemäß der in Beispiel 1 beschriebenen Vorgehensweise hergestellt.

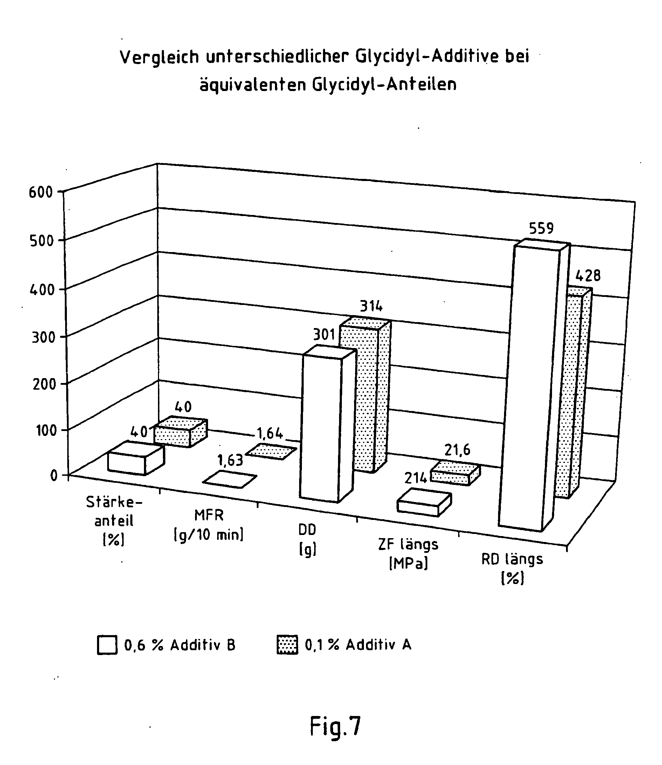

Die beiden so hergestellten Materialien bzw. daraus hergestellte Blasfolien wurden miteinander verglichen. Figur 7 zeigt die Resultate:

Figur 7 zeigt, dass die Additive 1 und 2 bei mengenmäßig äquivalenten Glycidyl-Anteilen (0,1 Gew.% *Additiv A* versus 0,6 Gew.% *Additiv B*) zu vergleichbaren Materialeigenschaften des polymeren Materials führen. Einzig der Wert für die Reißdehnung (RD) ist bei der Additiv B enthaltenden Folie merklich höher.

Im Ergebnis lässt sich anhand der durchgeführten Versuche Folgendes feststellen:

Die Materialeigenschaften gattungsgemäßer stärkehaltiger polymerer Materialien lassen sich durch Zugabe glycidylhaltiger Additive signifikant verändern. Während herkömmliche stärkehaltige polymere Materialien ohne Glycidyl-Additiv oberhalb von etwa 34 Gew.% unzureichende mechanische Eigenschaften aufweisen, ermöglicht bereits ein Gehalt von 0,1 % von Glycidyl-Additiv die Herstellung eines polymeren Materials mit einem Stärkegehalt von 40 Gew. % bei gleichzeitig ausgezeichneten mechanischen Eigenschaften.

Während die Erhöhung des Stärkeanteils zwangsläufig zu Lasten der Elastizität des glycidyl-modifizierten Materials geht, wird die Durchstoßfestigkeit des glycidyl-modifizierten Materials durch eine Erhöhung des Stärkeanteils nicht beeinflusst.

Ohne sich auf eine bestimmte Theorie festzulegen, wird angenommen, dass das Glycidyl-Additiv als Compatibilizer zwischen den ansonsten unverträglichen Polymeren Stärke und Polyester wirkt. Die Effizienz der Polymervernetzung manifestiert sich in erhöhten Zugfestigkeitswerten bei gleichzeitig niedriger Schmelzflussrate (MFR).

Die Erfindung ist vorstehend anhand von Ausführungsbeispielen exemplarisch beschrieben worden. Dabei versteht sich, dass die Erfindung nicht auf die beschriebenen Ausführungsbeispiele beschränkt ist. Vielmehr ergeben sich für den Fachmann im Rahmen der Erfindung vielfältige Abwandlungs- und Modifikationsmöglichkeiten und der Schutzumfang der Erfindung wird insbesondere durch die nachfolgenden Patentansprüche festgelegt.

## Patentansprüche

1. Verfahren zur Herstellung eines stärkehaltigen polymeren Materials, **gekennzeichnet durch**:
(a) Herstellen eines Gemischs enthaltend wenigstens
- 1 bis 75 Gew.% Stärke und/oder Stärkederivat,
- 10 bis 85 Gew.% Polyester und
- 0,01 bis 7 Gew.% eines epoxidgruppenhaltigen Polymers;
(b) Homogenisieren des Gemischs unter Zuführen von thermischer und/oder mechanischer Energie;
(c) Einstellen des Wassergehalts des Gemischs auf, kleiner 1,5 Gew.%, bezogen auf die Gesamtzusammensetzung des Gemischs.

2. Verfahren nach Anspruch 1, **dadurch gekennzeichnet, dass** das Gemisch 5 bis 75 Gew.%, insbesondere 10 bis 75 Gew.%, vorzugsweise 15 bis 70 Gew.%, noch bevorzugter 25 bis 55 Gew.%, am bevorzugtesten 34 bis 51 Gew.% Stärke und/oder Stärkederivat enthält.

3. Verfahren nach Anspruch 1 oder 2, **dadurch gekennzeichnet, dass** das Gemisch 20 bis 85 Gew.%, insbesondere 30 bis 80 Gew.%, noch bevorzugter 40 bis 80 Gew.% Polyester enthält.

4. Verfahren nach einem der vorstehenden Ansprüche, **dadurch gekennzeichnet, dass** das Gemisch 0,01 bis 5 Gew.%, insbesondere 0,05 bis 3 Gew.%, noch bevorzugter 0,1 bis 2 Gew.% epoxidgruppenhaltiges Polymer enthält.

5. Verfahren nach einem der vorstehenden Ansprüche, **dadurch gekennzeichnet, dass** das polymere Material gemäß EN 13432 biologisch abbaubar ist.

6. Verfahren nach einem der vorstehenden Ansprüche, **dadurch gekennzeichnet, dass** der Polyester ausgewählt ist aus der Gruppe bestehend aus aliphatisch-aromatischem Copolyester, aliphatischem Polyester, aromatischen Polyester, PHA, PLA, PHB und PHBV.

7. Verfahren nach einem der vorstehenden Ansprüche, **dadurch gekennzeichnet, dass** der Polyester eine Glasübergangstemperatur (Tg) kleiner 0°C, insbesondere kleiner -4°C, weiter bevorzugt kleiner -10°C, noch weiter bevorzugt kleiner -20°C und am bevorzugtesten kleiner -30°C aufweist.

8. Verfahren nach einem der vorstehenden Ansprüche, **dadurch gekennzeichnet, dass** als aliphatisch-aromatischer Polyester ein Copolyester, insbesondere ein statistischer Copolyester, auf Basis von mindestens Adipinsäure eingesetzt wird.

9. Verfahren nach einem der vorstehenden Ansprüche, **dadurch gekennzeichnet, dass** als aliphatisch-aromatischer Polyester ein Copolyester, insbesondere ein statistischer Copolyester, auf Basis von 1,4-Butandiol, Adipinsäure und Terephthalsäure bzw. Terephthalsäurederivat (z. B. Dimethylterephthalat DMT) eingesetzt wird.

10. Verfahren nach Anspruch 9, **dadurch gekennzeichnet, dass** der Polyester eine Glasübergangstemperatur (Tg) von -25 bis -40°C, insbesondere -30 bis -35°C, und/oder einen Schmelzbereich von 100 bis 120°C, insbesondere 105 bis 115°C, aufweist.

11. Verfahren nach einem der vorstehenden Ansprüche, **dadurch gekennzeichnet, dass** der Polyester ein aliphatischer Polyester ausgewählt aus der Gruppe bestehend aus Polyhydroxvalerat, Polyhydroxybutyrat-Hydroxyvalerat-Copolymer und Polycaprolacton ist.

12. Verfahren nach einem der vorstehenden Ansprüche, **dadurch gekennzeichnet, dass** der Polyester ein aliphatischer Polyester auf Succinat-Basis ist, wobei der Polyester insbesondere ausgewählt ist aus der Gruppe bestehend aus Polybutylensuccinat (PBS), Polybutylensuccinatadipat (PBSA) und Polyethylensuccinat (PES).

13. Verfahren nach einem der vorstehenden Ansprüche, **dadurch gekennzeichnet, dass** der Polyester gemäß EN 13432 biologisch abbaubar ist.

14. Verfahren nach einem der vorstehenden Ansprüche, **dadurch gekennzeichnet, dass** das epoxidgruppenhaltige Polymer ein Copolymer ist.

15. Verfahren nach einem der vorstehenden Ansprüche, **dadurch gekennzeichnet, dass** das epoxidgruppenhaltige Polymer ein glycidyl(meth)acrylathaltiges Polymer ist.

16. Verfahren nach Anspruch 15, **dadurch gekennzeichnet, dass** das glycidyl(meth)acrylathaltige Polymer ein Copolymer aus (a) Styrol und/oder Ethylen und/oder Methylmethacrylat und/oder Methylacrylat und (b) Glycidyl(meth)acrylat ist.

17. Verfahren nach Anspruch 15 oder 16, **dadurch gekennzeichnet, dass** das glycidyl(meth)acrylathaltige Polymer ein epoxidgruppenhaltiges Copolymer auf Basis von Styrol, Ethylen, Acrylsäureester und/oder Methacrylsäureester ist.

18. Verfahren nach einem der Ansprüche 15 bis 17, **dadurch gekennzeichnet, dass** das glycidyl(meth)acrylat-haltige Polymer ein Copolymer ist, welches ausgewählt ist aus der Gruppe bestehend aus Styrol-Methylmethacrylat-Glycidylmethacrylat, Ethylen-Methylacrylat-Glycidylmethacrylat und Ethylen-Glycidylmethacrylat.

19. Verfahren nach einem der Ansprüche 15 bis 18, **dadurch gekennzeichnet, dass** das glycidyl(meth)acrylathaltige Polymer Glycidyl(meth)acrylat in einer Menge von 1 bis 60 Gew.%, insbesondere 5 bis 55 Gew.%, weiter bevorzugt 45 bis 52 Gew.%, bezogen auf die Gesamtzusammensetzung des glycidyl(meth)acrylathaltigen Polymers, enthält.

20. Verfahren nach einem der vorstehenden Ansprüche, **dadurch gekennzeichnet, dass** das epoxidgruppenhaltige Polymer ein Molekulargewicht (M_{w}) von 1.000 bis 25.000 insbesondere 3.000 bis 10.000 aufweist.

21. Verfahren nach einem der vorstehenden Ansprüche, **dadurch gekennzeichnet, dass** das Homogenisieren des Gemischs durch Dispergieren, Rühren, Kneten und/oder Extrudieren erfolgt.

22. Verfahren nach Anspruch 21, **dadurch gekennzeichnet, dass** das Homogenisieren des Gemischs durch Extrusion erfolgt.

23. Verfahren nach einem der vorstehenden Ansprüche, **dadurch gekennzeichnet, dass** das Homogenisieren des Gemischs durch Einwirken von Scherkräften auf das Gemisch erfolgt.

24. Verfahren nach einem der vorstehenden Ansprüche, **dadurch gekennzeichnet, dass** das Gemisch beim Homogenisieren bzw. Extrudieren auf eine Temperatur von 90 bis 250°C, insbesondere 130 bis 220°C, erwärmt wird.

25. Verfahren nach einem der vorstehenden Ansprüche, **dadurch gekennzeichnet, dass** der Wassergehalt des Gemischs kleiner 1 Gew.%, bezogen auf die Gesamtzusammensetzung, eingestellt wird.

26. Verfahren nach einem der vorstehenden Ansprüche, **dadurch gekennzeichnet, dass** der Wassergehalt des Gemischs während des Homogenisierens eingestellt wird.

27. Verfahren nach einem der vorstehenden Ansprüche, **dadurch gekennzeichnet, dass** der Wassergehalt des Gemischs durch Entgasen des Gemischs, insbesondere durch Entgasen der Schmelze, eingestellt wird.

28. Verfahren nach einem der vorstehenden Ansprüche, **dadurch gekennzeichnet, dass** der Wassergehalt des Gemischs durch Trocknen des Gemischs während des Homogenisierens bzw. Extrudierens eingestellt wird.

29. Verfahren nach einem der vorstehenden Ansprüche, **dadurch gekennzeichnet, dass** eine aus dem polymeren Material hergestellte Folie eine Zugfestigkeit gemäß DIN 53455 von 5 bis 60 N/mm², insbesondere von 10 bis 40 N/mm² aufweist.

30. Verfahren nach einem der vorstehenden Ansprüche, **dadurch gekennzeichnet, dass** eine aus dem polymeren Material hergestellte Folie eine Reißdehnung gemäß DIN 53455 von 100 bis 1000 %, insbesondere von 200 bis 800 %, aufweist.

31. Stärkehaltiges thermoplastisch verarbeitbares polymeres Material, **dadurch gekennzeichnet, dass**
(a) das polymere Material weniger als 3 Gew.%, bezogen auf die Gesamtzusammensetzung, Wasser enthält,
(b) der Stärkeanteil des polymeren Materials mindestens 34 Gew.% beträgt,
(c) das polymere Material einen Polyester enthält, wobei der Polyester ausgewählt ist aus der Gruppe bestehend aus aliphatisch-aromatischem Copolyester, aliphatischem Polyester, aromatischen Polyester, PHA, PLA, PHB und PHBV, and
(d) das polymere Material ein epoxidgruppenhaltiges Copolymer mit einem Molekulargewicht (M_{W}) von 1.000 bis 25.000 enthält.

32. Polymeres Material nach Anspruch 31, **dadurch gekennzeichnet, dass** das polymere Material weniger als 7 Gew.%, insbesondere weniger als 5 Gew.%, vorzugsweise weniger als 3 Gew.%, bezogen auf die Gesamtzusammensetzung, Glycerin, Sorbitol und/oder Mischungen daraus enthält.

33. Polymeres Material nach Anspruch 31 oder 32, **dadurch gekennzeichnet, dass** der Stärkeanteil des polymeren Materials mindestens 35 Gew.%, insbesondere mindestens 36 Gew.%, vorzugsweise mindestens 37 Gew.%, weiter bevorzugt mindestens 38 Gew.% und am bevorzugtesten mindestens 39 Gew.% beträgt.

34. Polymeres Material nach einem der Ansprüche 31 bis 33, **dadurch gekennzeichnet, dass** eine aus dem polymeren Material hergestellte Folie eine Reißdehnung gemäß DIN 53455 von mindestens 300 % und/oder einen Dart-Drop-Wert gemäß ASTM D-1709 von mindestens 10 g/µm aufweist.

35. Polymeres Material nach einem der Ansprüche 31 bis 34, **dadurch gekennzeichnet, dass** das polymere Material den Polyester in einer Menge kleiner 70 Gew.%, insbesondere kleiner 65 Gew.%, noch bevorzugter kleiner 60 Gew.%, am bevorzugtesten kleiner 55 Gew.%, enthält.

36. Polymeres Material nach einem der Ansprüche 31 bis 35, **dadurch gekennzeichnet, dass** der Polyester ein Polyester gemäß einem der Ansprüche 7bis 13 ist.

37. Verwendung eines polymeren Materials nach einem der vorstehenden Ansprüche zur Herstellung von Formteilen, Folien oder Fasern.

38. Formteile, Folien oder Fasern, enthaltend ein polymeres Material nach einem der Ansprüche 31 bis 36.

## Claims

1. Method for producing a polymer material containing starch, **characterised by**:
(a) Producing a mixture containing at least
- 1 to 75 wt.% starch and/or starch derivative,
- 10 to 85 wt.% polyester and
- 0.01 to 7 wt.% of a polymer containing epoxide groups;
(b) Homogenising the mixture by supplying thermal and/or mechanical energy;
(c) Setting the water content of the mixture to less than 1.5 wt.% based on the total composition of the mixture.

2. Method according to Claim 1, **characterised in that** the mixture contains 5 to 75 wt.%, in particular 10 to 75 wt.%, preferably 15 to 70 wt.%, more preferably 25 to 55 wt.%, most preferably 34 to 51 wt.% starch and/or starch derivative.

3. Method according to Claim 1 or 2, **characterised in that** the mixture contains 20 to 85 wt.%, in particular 30 to 80 wt.%, more preferably 40 to 80 wt.% polyester.

4. Method according to any one of the preceding claims, **characterised in that** the mixture contains 0.01 to 5 wt.%, in particular 0.05 to 3 wt.%, more preferably 0.1 to 2 wt.% polymer containing epoxide groups.

5. Method according to any one of the preceding claims, **characterised in that** the polymer material is biodegradable according to EN 13432.

6. Method according to any one of the preceding claims, **characterised in that** the polyester is selected from the group consisting of aliphatic-aromatic co-polyester, aliphatic polyester, aromatic polyester, PHA, PLA, PHB and PHBV.

7. Method according to any one of the preceding claims, **characterised in that** the polyester has a glass transition temperature (Tg) of less than 0°C, in particular less than -4°C, more preferably less than -10°C, even more preferably less than -20°C and most preferably less than - 30°C.

8. Method according to any one of the preceding claims, **characterised in that** a copolyester, in particular a random copolyester, based on at least adipic acid, is used as the aliphatic-aromatic polyester.

9. Method according to any one of the preceding claims, **characterised in that** a copolyester, in particular a random copolyester, based on 1,4-butanediol, adipic acid and terephthalic acid or terephthalic acid derivative (e.g. dimethyl terephthalate DMT), is used as the aliphatic-aromatic polyester.

10. Method according to Claim 9, **characterised in that** the polyester has a glass transition temperature (Tg) of -25 to -40°C, in particular -30 to -35°C, and/or a melting range of 100 to 120°C, in particular 105 to 115°C.

11. Method according to any one of the preceding claims, **characterised in that** the polyester is an aliphatic polyester selected from the group consisting of polyhydroxyvalerate, polyhydroxybutyrate-hydroxyvalerate copolymer and polycaprolactone.

12. Method according to any one of the preceding claims, **characterised in that** the polyester is an aliphatic polyester based on succinate, wherein the polyester in particular is selected from the group consisting of polybutylene succinate (PBS), polybutylene succinate adipate (PBSA) and polyethylene succinate (PES).

13. Method according to any one of the preceding claims, **characterised in that** the polyester is biodegradable according to EN 13432.

14. Method according to any one of the preceding claims, **characterised in that** the polymer containing epoxide groups is a copolymer.

15. Method according to any one of the preceding claims, **characterised in that** the polymer containing epoxide groups is a polymer containing glycidyl (meth)acrylate.

16. Method according to Claim 15, **characterised in that** the polymer containing glycidyl (meth)acrylate is a copolymer comprising (a) styrene and/or ethylene and/or methyl methacrylate and/or methyl acrylate and (b) glycidyl (meth)acrylate.

17. Method according to Claim 15 or 16, **characterised in that** the polymer containing glycidyl (meth)acrylate is a copolymer containing epoxide groups based on styrene, ethylene, acrylic ester and/or methacrylic ester.

18. Method according to any one of Claims 15 to 17, **characterised in that** the polymer containing glycidyl (meth)acrylate is a copolymer which is selected from the group consisting of styrene - methyl methacrylate - glycidyl methacrylate, ethylene - methyl acrylate - glycidyl methacrylate and ethylene - glycidyl methacrylate.

19. Method according to any one of Claims 15 to 18, **characterised in that** the polymer containing glycidyl (meth)acrylate contains glycidyl (meth)acrylate in a quantity from 1 to 60 wt.%, in particular 5 to 55 wt.%, more preferably 45 to 52 wt.%, based on the total composition of the polymer containing glycidyl (meth)acrylate.

20. Method according to any one of the preceding claims, **characterised in that** the polymer containing epoxide groups has a molecular weight (M_{W}) from 1,000 to 25,000, in particular 3,000 to 10,000.

21. Method according to any one of the preceding claims, **characterised in that** the mixture is homogenised by dispersing, stirring, kneading and/or extruding.

22. Method according to Claim 21, **characterised in that** the mixture is homogenised by extrusion.

23. Method according to any one of the preceding claims, **characterised in that** the mixture is homogenised by the action of shear forces on the mixture.

24. Method according to any one of the preceding claims, **characterised in that** the mixture is heated to a temperature from 90 to 250°C, in particular 130 to 220°C, during homogenisation or extrusion.

25. Method according to any one of the preceding claims, **characterised in that** the water content of the mixture is set to less than 1 wt.%, based on the total composition.

26. Method according to any one of the preceding claims, **characterised in that** the water content of the mixture is set during homogenisation.

27. Method according to any one of the preceding claims, **characterised in that** the water content of the mixture is set by degassing the mixture, in particular by degassing the melt.

28. Method according to any one of the preceding claims, **characterised in that** the water content of the mixture is set by drying the mixture during homogenisation or extrusion.

29. Method according to any one of the preceding claims, **characterised in that** a film produced from the polymer material has a tensile strength according to DIN 53455 from 5 to 60 N/mm², in particular from 10 to 40 N/mm².

30. Method according to any one of the preceding claims, **characterised in that** a film produced from the polymer material has an elongation at break according to DIN 53455 from 100 to 1000%, in particular from 200 to 800%.

31. Polymer material which contains starch and can be thermoplastically processed, **characterised in that**
(a) the polymer material contains less than 3 wt.% water, based on the total composition,
(b) the proportion of starch in the polymer material is at least 34 wt.%,
(c) the polymer material contains a polyester, wherein the polyester is selected from the group consisting of aliphatic-aromatic copolyester, aliphatic polyester, aromatic polyester, PHA, PLA, PHB and PHBV and
(d) the polymer material contains a copolymer containing epoxide groups which has a molecular weight (M_{W}) from 1,000 to 25,000.

32. Polymer material according to Claim 31, **characterised in that** the polymer material contains less than 7 wt.%, in particular less than 5 wt.%, preferably less than 3 wt.% glycerol, sorbitol and/or mixtures thereof, based on the total composition.

33. Polymer material according to Claim 31 or 32, **characterised in that** the proportion of starch in the polymer material is at least 35 wt.%, in particular at least 36 wt.%, preferably at least 37 wt.% more preferably at least 38 wt.% and most preferably at least 39 wt.%

34. Polymer material according to any one of Claims 31 to 33, **characterised in that** a film produced from the polymer material has an elongation at break according to DIN 53455 of at least 300% and/or a dart drop value according to ASTM D-1709 of at least 10 g/µm.

35. Polymer material according to any one of Claims 31 to 34, **characterised in that** the polymer material contains the polyester in a quantity of less than 70 wt.%, in particular less than 65 wt.%, more preferably less than 60 wt.%, most preferably less than 55 wt.%

36. Polymer material according to any one of Claims 31 to 35, **characterised in that** the polyester is a polyester according to any one of Claims 7 to 13.

37. Use of a polymer material according to any one of the preceding claims for producing formed parts, films or fibres.

38. Formed parts, films or fibres containing a polymer material according to any one of Claims 31 to 36.

## Revendications

1. Procédé de préparation d'un matériau polymère contenant de l'amidon, **caractérisé par** :
(a) la préparation d'un mélange contenant au moins
- 1 à 75% en poids d'amidon et/ou de dérivés de l'amidon,
- 10 à 85% en poids d'un polyester, et
- 0,01 à 7% en poids d'un polymère contenant des radicaux époxyde ;
(b) l'homogénéisation du mélange avec apport d'énergie thermique et/ou mécanique ;
(c) l'ajustement de la teneur en eau du mélange à moins de 1,5% en poids, sur base de la composition totale du mélange.

2. Procédé selon la revendication 1, **caractérisé en ce que** le mélange contient 5 à 75% en poids, en particulier 10 à 75% en poids, de préférence 15 à 70% en poids, de manière encore plus préférée 25 à 55% en poids, idéalement 34 à 51% en poids d'amidon et/ou de dérivés de l'amidon.

3. Procédé selon la revendication 1 ou 2, **caractérisé en ce que** le mélange contient 20 à 85% en poids, en particulier 30 à 80% en poids, de manière encore plus préférée, 40 à 80% en poids de polyester.

4. Procédé selon l'une des revendications précédentes, **caractérisé en ce que** le mélange contient 0,01 à 5% en poids, en particulier 0,05 à 3% en poids, de manière encore plus préférée, 0,1 à 2% en poids d'un polymère contenant des radicaux époxyde.

5. Procédé selon l'une des revendications précédentes, **caractérisé en ce que** le matériau polymère est biologiquement dégradable selon EN 13432.

6. Procédé selon l'une des revendications précédentes, **caractérisé en ce que** le polyester est choisi parmi le groupe consistant en les copolyesters aliphatiques-aromatiques, les polyesters aliphatiques, les polyesters aromatiques, le PHA, le PLA, le PHB et le PHBV.

7. Procédé selon l'une des revendications précédentes, **caractérisé en ce que** le polyester présente une température de transition vitreuse (Tv) inférieure à 0°C, en particulier inférieure à -4°C, de manière plus préférée inférieure à -10°C, de manière encore plus préférée inférieure à -20°C et idéalement, inférieure à - 30°C.

8. Procédé selon l'une des revendications précédentes, **caractérisé en ce que** comme polyester aliphatique-aromatique, on met en oeuvre un copolyester, en particulier un copolyester statistique à base au moins, de l'acide adipique.

9. Procédé selon l'une des revendications précédentes, **caractérisé en ce que** comme polyester aliphatique-aromatique, on met en oeuvre un copolyester, en particulier un copolyester statistique à base de 1,4-butanol, d'acide adipique et d'acide téréphtalique respectivement d'un dérivé de l'acide téréphtalique (par exemple, téréphtalate de diméthyle, DMT).

10. Procédé selon la revendication 9, **caractérisé en ce que** le polyester présente une température de transition vitreuse (Tv) située dans l'intervalle allant de -25 à -40°C, en particulier de -30 à -35°C, et/ou une plage de fusion allant de 100 à 120°C, en particulier de 105 à 115°C.

11. Procédé selon l'une des revendications précédentes, **caractérisé en ce que** le polyester est un polyester aliphatique choisi parmi le groupe consistant en le polyhydroxyvalérate, le copolymère poly(hydroxybutyrate-hydroxyvalérate) et la polycaprolactone.

12. Procédé selon l'une des revendications précédentes, **caractérisé en ce que** le polyester est un polyester aliphatique à base de succinate, où le polyester est choisi en particulier, parmi le groupe consistant en le poly(succinate de butylène) (PBS), le poly(succinate-adipate de butylène) (PBSA), et le poly(succinate d'éthylène) (PES).

13. Procédé selon l'une des revendications précédentes, **caractérisé en ce que** le polyester est biologiquement dégradable selon EN 13432.

14. Procédé selon l'une des revendications précédentes, **caractérisé en ce que** le polymère contenant des radicaux époxyde est un copolymère.

15. Procédé selon l'une des revendications précédentes, **caractérisé en ce que** le polymère contenant des radicaux époxyde est un polymère contenant le (méth)acrylate de glycidyle.

16. Procédé selon la revendication 15, **caractérisé en ce que** le polymère contenant le (méth)acrylate de glycidyle est un copolymère de (a) styrène et/ou éthylène et/ou méthacrylate de méthyle et/ou acrylate de méthyle, et (b) (méth)acrylate de glycidyle.

17. Procédé selon la revendication 15 ou 16, **caractérisé en ce que** le polymère contenant le (méth)acrylate de glycidyle est un copolymère contenant des radicaux époxyde à base de styrène, d'éthylène, d'un ester acrylique et/ou d'un ester méthacrylique.

18. Procédé selon l'une des revendications 15 à 17, **caractérisé en ce que** le polymère contenant le (méth)acrylate de glycidyle est un copolymère qui est choisi parmi le groupe consistant en styrène-méthacrylate de méthyle-méthacrylate de glycidyle, éthylène-acrylate de méthyle-méthacrylate de glycidyle, et éthylène-méthacrylate de glycidyle.

19. Procédé selon l'une des revendications 15 à 18, **caractérisé en ce que** le polymère contenant le (méth)acrylate de glycidyle contient le (méth)acrylate de glycidyle en une quantité allant de 1 à 60% en poids, en particulier de 5 à 55% en poids, de préférence 45 à 52% en poids, sur base de la composition totale du polymère contenant le (méth)acrylate de glycidyle.

20. Procédé selon l'une des revendications précédentes, **caractérisé en ce que** le polymère contenant des radicaux époxyde présente un poids moléculaire (Mw) situé dans l'intervalle allant de 1000 à 25 000, en particulier de 3000 à 10 000.

21. Procédé selon l'une des revendications précédentes, **caractérisé en ce que** l'homogénéisation du mélange est réalisée par dispersion, agitation, malaxage et/ou extrusion.

22. Procédé selon l'une des revendications précédentes, **caractérisé en ce que** l'homogénéisation du mélange est réalisée par extrusion.

23. Procédé selon l'une des revendications précédentes, **caractérisé en ce que** l'homogénéisation du mélange est réalisée par action de forces de cisaillement sur le mélange.

24. Procédé selon l'une des revendications précédentes, **caractérisé en ce que** le mélange est chauffé à une température allant de 90 à 250°C, en particulier de 130 à 220°C, lors de l'homogénéisation et respectivement, de l'extrusion.

25. Procédé selon l'une des revendications précédentes, **caractérisé en ce que** la teneur en eau du mélange est ajustée à moins de 1%, sur base de la composition totale.

26. Procédé selon l'une des revendications précédentes, **caractérisé en ce que** la teneur en eau du mélange est ajustée pendant l'homogénéisation.

27. Procédé selon l'une des revendications précédentes, **caractérisé en ce que** la teneur en eau du mélange est ajustée par dégazage du mélange, en particulier par dégazage de la masse fondue.

28. Procédé selon l'une des revendications précédentes, **caractérisé en ce que** la teneur en eau du mélange est ajustée par séchage du mélange pendant l'homogénéisation et respectivement, l'extrusion.

29. Procédé selon l'une des revendications précédentes, **caractérisé en ce qu'**une feuille préparée à partir du matériau polymère présente une résistance en traction selon DIN 53455, située dans l'intervalle allant de 5 à 60 N/mm², en particulier de 10 à 40 N/mm².

30. Procédé selon l'une des revendications précédentes, **caractérisé en ce qu'**une feuille préparée à partir du matériau polymère présente un allongement à la rupture selon DIN 53455, situé dans l'intervalle allant de 100 à 1000%, en particulier de 200 à 800%.

31. Matériau polymère, pouvant être traité de manière thermoplastique, contenant de l'amidon, **caractérisé en ce que**
(a) le matériau polymère contient moins de 3% en poids d'eau, sur base de la composition totale,
(b) la proportion d'amidon dans le matériau polymère se situe à au moins 34% en poids,
(c) le matériau polymère contient un polyester, où le polyester est choisi parmi le groupe consistant en un copolyester aliphatique-aromatique, un polyester aliphatique, un polyester aromatique, le PHA, le PLA, le PHB et le PHBV, et
(d) le matériau polymère contient un copolymère contenant des radicaux époxyde, ayant un poids moléculaire (Mw) situé dans l'intervalle allant de 1000 à 25 000.

32. Matériau polymère selon la revendication 31, **caractérisé en ce que** le matériau polymère contient moins de 7% en poids, en particulier moins de 5% en poids, de préférence moins de 3% en poids, sur base de la composition totale, de glycérine, de sorbitol et/ou de leurs mélanges.

33. Matériau polymère selon la revendication 31 ou 32, **caractérisé en ce que** la proportion d'amidon dans le matériau polymère se situe à au moins 35% en poids, en particulier au moins 36% en poids, de préférence au moins 37% en poids, de manière plus préférée au moins 38% en poids et idéalement, au moins 39% en poids.

34. Matériau polymère selon l'une des revendications 31 à 33, **caractérisé en ce qu'**une feuille préparée à partir du matériau polymère présente un allongement à la rupture selon DIN 53455 d'au moins 300% et/ou une valeur dart drop selon ASTM D-1709 d'au moins 10 g/µm.

35. Matériau polymère selon l'une des revendications 31 à 34, **caractérisé en ce que** le matériau polymère contient le polyester en une quantité inférieure à 70% en poids, en particulier inférieure à 65% en poids, de préférence inférieure à 60% en poids, idéalement inférieure à 55% en poids.

36. Matériau polymère selon l'une des revendications 31 à 35, **caractérisé en ce que** le polyester est un polyester selon l'une des revendications 7 à 13.

37. Utilisation d'un matériau polymère selon l'une des revendications précédentes, pour la préparation d'articles moulés, de feuilles ou de fibres.

38. Articles moulés, feuilles ou fibres, contenant un matériau polymère selon l'une des revendications 31 à 36.
